(19) Europäisches Patentamt / European Patent Office / Office européen des brevets

(11) **EP 3 011 484 B1**

(12) **FASCICULE DE BREVET EUROPEEN**

(45) Date de publication et mention de la délivrance du brevet:
**07.09.2022 Bulletin 2022/36**

(21) Numéro de dépôt: **14759010.3**

(22) Date de dépôt: **23.07.2014**

(51) Classification Internationale des Brevets (IPC):
**G06F 30/15** $^{(2020.01)}$ **G06F 30/20** $^{(2020.01)}$

(52) Classification Coopérative des Brevets (CPC):
**B60C 99/006; G06F 30/15; G06F 30/20**

(86) Numéro de dépôt international:
**PCT/FR2014/051909**

(87) Numéro de publication internationale:
**WO 2015/015093 (05.02.2015 Gazette 2015/05)**

(54) **PROCEDE DE SIMULATION DE RAYON ECRASE DE PNEUMATIQUE DE VEHICULE AUTOMOBILE**

VERFAHREN ZUR SIMULATION EINES ABLENKUNGSRADIUS EINES KRAFTFAHRZEUGREIFENS

METHOD FOR SIMULATING A DEFLECTION RADIUS OF A MOTOR VEHICLE TYRE

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **02.08.2013 FR 1357695**

(43) Date de publication de la demande:
**27.04.2016 Bulletin 2016/17**

(73) Titulaire: **Compagnie Générale des Etablissements Michelin**
**63000 Clermont-Ferrand (FR)**

(72) Inventeurs:
- **BUISSON, Jérémy**
  **F-63040 Clermont-ferrand Cedex 9 (FR)**
- **VIRIN, Teddy**
  **F-63040 Clermont-ferrand Cedex 9 (FR)**

(74) Mandataire: **Roussy, Delphine**
**M. F. P. MICHELIN**
**23, place des Carmes-Déchaux**
**Service juridique - Propriété Intellectuelle**
**DCJ/PI - F35 - Site de Ladoux**
**63040 Clermont-Ferrand Cedex 9 (FR)**

(56) Documents cités:
**WO-A2-2012/071379    JP-A- 2004 161 210**

- **K. GUO ET AL: "UniTire: unified tire model for vehicle dynamic simulation", VEHICLE SYSTEM DYNAMICS, vol. 45, no. sup1, 2007, pages 79-99, XP055111320, ISSN: 0042-3114, DOI: 10.1080/00423110701816742**
- **BENOIT DURAND-GASSELIN ET AL: "Assessing the thermo-mechanical TaMeTirE model in offline vehicle simulation and driving simulator tests", VEHICLE SYSTEM DYNAMICS, vol. 48, no. sup1, décembre 2010 (2010-12), pages 211-229, XP055111255, ISSN: 0042-3114, DOI: 10.1080/00423111003706730**
- **Leon Merkx: "Overturning moment analysis using the Flat plank tyre tester", DCT 2004-78, 2004, XP055111335, Extrait de l'Internet: URL:http://alexandria.tue.nl/repository/books/625826.pdf [extrait le 2014-04]**
- **D. LU ET AL: "Modelling of tire overturning moment and loaded radius", VEHICLE SYSTEM DYNAMICS, vol. 44, no. sup1, 2006, pages 104-114, XP055111274, ISSN: 0042-3114, DOI: 10.1080/00423110600869297**
- **D. Lu ET AL: "Modelling of tire overturning moment and loaded radius", Vehicle System Dynamics, vol. 44, no. sup1, 1 January 2006 (2006-01-01), pages 104-114, XP055111274, ISSN: 0042-3114, DOI: 10.1080/00423110600869297**

**Description**

L'invention concerne les procédés de détermination du rayon écrasé d'un pneumatique.

En roulage, sous conditions typiques de celles rencontrées sur un véhicule susceptible d'être équipé d'un pneumatique donné, les conditions couvrent une large gamme d'usages, depuis le roulage en ligne droite jusqu'au roulage à grande vitesse sur circuit.

Le comportement routier des véhicules met en œuvre des phénomènes complexes, en particulier au niveau des pneumatiques. La prise en compte de ces phénomènes pour comprendre, analyser et simuler le comportement est essentielle pour améliorer celui-ci. Pour cela, les outils de simulation requièrent des modèles descriptifs de la contribution des pneumatiques. Différentes grandeurs associées au torseur du pneumatique ou à sa géométrie en roulage sont mises en œuvre ; ainsi en est-il pour le rayon écrasé. Celui-ci est ainsi particulièrement important pour rendre compte des limites de renversement d'un véhicule, l'éventuel contact de la jante avec la chaussée, l'assiette du véhicule et sa hauteur en lien avec son aérodynamique. Sur ce sujet, il es connu de l'état de l'art les documents:

XP055111320: UniTire: unified tire model for vehicle dynamic simulation.

XP055111255: Assessing the thermo-mechanical TaMeTirE model in offline vehicle simulation and driving simulator tests.

XP055111274: Modelling of tire overturning moment and loaded radius

JP2004161210:Preparing method for structure model, predicting method for tire performance, tire manufacturing method, tire, and program.

WO2012071379: Diagnostic tire test method.

Différentes formulations ont déjà été proposées pour rendre compte de l'évolution du rayon écrasé d'un pneumatique. Parmi celles-ci, on peut citer différentes versions des formulations dites « formules magiques » de H.B. Pacejka, dont la version la plus diffusée MF-5.2 ou la dernière variante MF-6.1. La formulation MF-5.2 la plus usitée actuellement

$$R_l = R_0 - \frac{Fz}{Kzz}$$

décrit le rayon écrasé comme suit :　　　　　　　, avec en complément un effet lié à la vitesse de variation du rayon sur la charge.

La formulation MF-6.1 y ajoute des effets dus à la pression, aux efforts, à la vitesse, selon une formulation différente de celle inventée, puisque basée sur la description duale de la charge verticale.

On a également proposé un modèle destiné à connaître l'écart entre une jante et le sol pour prédire le risque de renversement du à un contact de la jante au sol. Ce modèle s'appuie sur un modèle de rayon écrasé :

$$R_L = \left(k_{0_0} + k_{0_V}.V + k_{0_P}.P\right) + |\gamma|.k_\gamma + F_Z.\left(k_{Z_0} + k_{Z_V}.V + k_{Z_P}.P\right) + |F_Y|.\left(k_{Y_0} + k_{Y_V}.V + k_{Y_P}.P\right)$$

Le but de l'invention est de proposer un procédé pour l'estimation du rayon écrasé du pneumatique présentant une meilleure acuité et une grande simplicité de mise en œuvre.

Ce but est atteint selon l'invention grâce à un procédé de réalisation de pneumatique de véhicule automobile, comportant une étape d'estimation d'un rayon écrasé $R_l$ du pneumatique par utilisation d'une formule de la forme :

$$R_l = R_0 - \frac{Fz}{Kzz} + R_V \times V^2 - \left(\frac{R_{Y1}}{Pg} + R_{Y2}\right) \times |Fy| + R_\gamma \times |\gamma|$$

, où $K_{ZZ}$ s'écrit sous la forme $K_{ZZ} = K_{ZZ0} + K_{ZZp} \times Pg$ , $K_{ZZ0}$ et $K_{ZZp}$ étant des valeurs numériques, où Pg est la pression de gonflage du pneumatique, V est la vitesse du véhicule, $F_Z$ est la charge appliquée sur le pneumatique, $F_Y$ est l'effort de poussée transversale exercé sur le pneumatique, $\gamma$ est l'angle de carrossage du véhicule, $R_0$ est une valeur de rayon libre du pneumatique au repos, $R_v$ est un coefficient d'influence de la vitesse du véhicule sur le rayon écrasé, $R_{Y1}$ est un coefficient d'influence d'une pression de gonflage sur le rayon écrasé via une valeur d'effort transversal, $R_{Y2}$ *est* un coefficient d'influence de l'effort transversal sur le rayon écrasé sans la part de l'effort transversal liée à la pression, $R_\gamma$ est un coefficient d'influence d'une valeur d'angle de carrossage du véhicule sur le rayon écrasé.

Avantageusement, les coefficients $R_0$, $R_V$, $R_{Y1}$, $R_{Y2}$, $R_\gamma$ sont définis par des essais physiques sur un pneumatique représentatif du pneumatique à concevoir.

Avantageusement, les essais physiques sont réalisés à l'aide d'une rouleuse de type sol plan.

Avantageusement, le procédé inclut l'étape consistant à utiliser le logiciel TameTire

Avantageusement, le procédé comporte l'étape consistant à utiliser les coefficients $R_0$, $R_V$, $R_{Y1}$, $R_{Y2}$, $R_\gamma$ dans

le logiciel TameTire.

Avantageusement, l'effort de poussée transversale est déterminé par simulation à l'aide d'un outil de traitement calculatoire de simulation en saisissant dans l'outil de traitement calculatoire de simulation une pluralité de paramètres physiques indicatifs de contraintes physiques auxquelles le pneu est soumis.

Avantageusement, l'effort de poussée transversale ($F_Y$) est déterminé en tenant compte d'une température interne et d'une température de surface du pneumatique.

Avantageusement, l'outil de traitement calculatoire de simulation est un processeur piloté par le logiciel Tame-Tire.

L'invention concerne également un processeur de calcul de comportement de pneumatique de véhicule automobile configuré pour estimer un rayon écrasé $R_l$ du pneumatique en mettant en œuvre une formule de la forme :

$$R_l = R_0 - \frac{Fz}{K_{ZZ}} + R_V \times V^2 - \left( \frac{R_{Y1}}{Pg} + R_{Y2} \right) \times |Fy| + R_\gamma \times |\gamma|$$

, où $K_{ZZ}$ s'écrit sous la forme $K_{ZZ} = K_{ZZ0} + K_{ZZp} \times Pg$ , $K_{ZZ0}$ et $K_{ZZp}$ étant des valeurs numériques, où Pg est la pression de gonflage du pneumatique, V est la vitesse du véhicule, $F_Z$ est la charge appliquée sur le pneumatique, $F_Y$ est l'effort de poussée transversale exercée sur le pneumatique, $\gamma$ est l'angle de carrossage du véhicule, $R_0$ est une valeur de rayon libre du pneumatique au repos, $R_v$ est un coefficient d'influence de la vitesse du véhicule sur le rayon écrasé, $R_{Y1}$ est un coefficient d'influence d'une pression de gonflage sur le rayon écrasé via une valeur d'effort transversal, $R_{Y2}$ est un coefficient d'influence de l'effort transversal sur le rayon écrasé sans la part de l'effort transversal liée à la pression, $R_\gamma$ est un coefficient d'influence d'une valeur d'angle de carrossage du véhicule sur le rayon écrasé.

L'invention concerne également un pneumatique de véhicule automobile, mettant en oeuvre une simulation du rayon écrasé $R_l$ du pneumatique par une formule de la forme:

$$R_l = R_0 - \frac{Fz}{K_{ZZ}} + R_V \times V^2 - \left( \frac{R_{Y1}}{Pg} + R_{Y2} \right) \times |Fy| + R_\gamma \times |\gamma|$$

, où $K_{ZZ}$ s'écrit sous la forme $K_{ZZ} = K_{ZZ0} + K_{ZZp} \times Pg$ , $K_{ZZ0}$ et $K_{ZZp}$ étant des valeurs numériques, où Pg est la pression de gonflage du pneumatique, V est la vitesse du véhicule, $F_Z$ est la charge appliquée sur le pneumatique, $F_Y$ est l'effort de poussée transversale exercée sur le pneumatique, $\gamma$ est l'angle de carrossage du véhicule, $R_0$ est une valeur de rayon libre du pneumatique au repos, $R_v$ est un coefficient d'influence de la vitesse du véhicule sur le rayon écrasé, $R_{Y1}$ est un coefficient d'influence d'une pression de gonflage sur le rayon écrasé via une valeur d'effort transversal, $R_{Y2}$ est un coefficient d'influence de l'effort transversal sur le rayon écrasé sans la part de l'effort transversal liée à la pression, $R_\gamma$ est un coefficient d'influence d'une valeur d'angle de carrossage du véhicule sur le rayon écrasé.

D'autres caractéristiques, buts et avantages de l'invention apparaitront à la lecture de la description qui va suivre, faite en référence aux figures annexées sur lesquelles :

- La figure 1 représente une évolution du rayon écrasé en fonction de la charge, pour un pneumatique selon l'invention,
- La figure 2 représente une évolution du rayon écrasé en fonction de la vitesse, pour une pneumatique selon l'invention,
- La figure 3 représente une évolution du rayon écrasé en fonction de l'effort de poussée transversale, pour une pneumatique selon l'invention
- La figure 4 représente une évolution du rayon écrasé en fonction de l'angle de carrossage, pour un pneumatique selon l'invention.

Le rayon écrasé d'un pneumatique $R_l(m)$ s'avère dépendre d'un grand nombre de facteurs parmi lesquels on retient la charge appliquée $F_z(N)$, la raideur verticale du pneumatique $K_{ZZ}(Nm^{-1})$ avec ses composantes pneumatique $K_{ZZp}(Nm^{-1})$ et structurelle $K_{ZZ0}(Nm^{-1})$, la vitesse de roulage $V(ms^{-1})$, la pression de gonflage $Pg(bar)$, l'effort de poussée transversale exercé $F_Y(N)$, l'angle de carrossage $\gamma(°)$. L'ensemble de ces grandeurs doit donc préférentiellement être connu, par exemple mesuré, ou imposé par un outil de simulation, pour accéder au rayon écrasé du pneumatique au travers d'une formulation mathématique. On procédera alors à une identification des contributions de ces différents facteurs pour ensuite pouvoir utiliser ladite formulation.

Afin de rendre compte de ces phénomènes, on met ici en œuvre la formulation suivante :

$$R_l = R_0 - \frac{Fz}{Kzz} + R_V \times V^2 - \left( \frac{R_{Y1}}{Pg} + R_{Y2} \right) \times |Fy| + R_\gamma \times |\gamma|$$

avec

$$K_{ZZ} = K_{ZZ0} + K_{ZZp} \times Pg$$

où $K_{ZZ0}$ et $K_{ZZp}$ sont préférentiellement des coefficients fixes et où on introduit les coefficients décrits maintenant. $R_0$(m) représente les dimensions du pneumatique au repos. Il s'agit ici de son rayon libre. $R_v$ est le coefficient d'influence de la vitesse, ici au carré, sur le rayon écrasé. $R_{Y1}$ est le coefficient d'influence de la pression de gonflage sur le rayon écrasé via l'effort transversal. $R_{Y2}$ est le coefficient d'influence de l'effort transversal sur le rayon écrasé, sans la part liée à la pression. $R_\gamma$ est le coefficient d'influence du carrossage sur le rayon écrasé.

La stratégie d'identification ou d'obtention des coefficients $R_0$(m), ..., $R_\gamma$ listés au paragraphe précédent repose d'une part sur la connaissance des grandeurs $F_Z$(N), ..., $\gamma$(°) listées au paragraphe encore précédent. Elle repose d'autre part sur la réalisation d'un plan d'expérience ou animation de mesure couvrant un large domaine pour chacune de ces grandeurs, dans une enveloppe globalement réaliste par rapport à l'usage du pneumatique. Elle repose enfin sur l'optimisation du jeu de coefficients grâce à un algorithme approprié. A partir d'une animation réalisée sur une machine de mesures appropriée, par exemple rouleuse de type sol plan, on accède à la connaissance des réponses du rayon écrasé du pneumatique en fonction des grandeurs retenues.

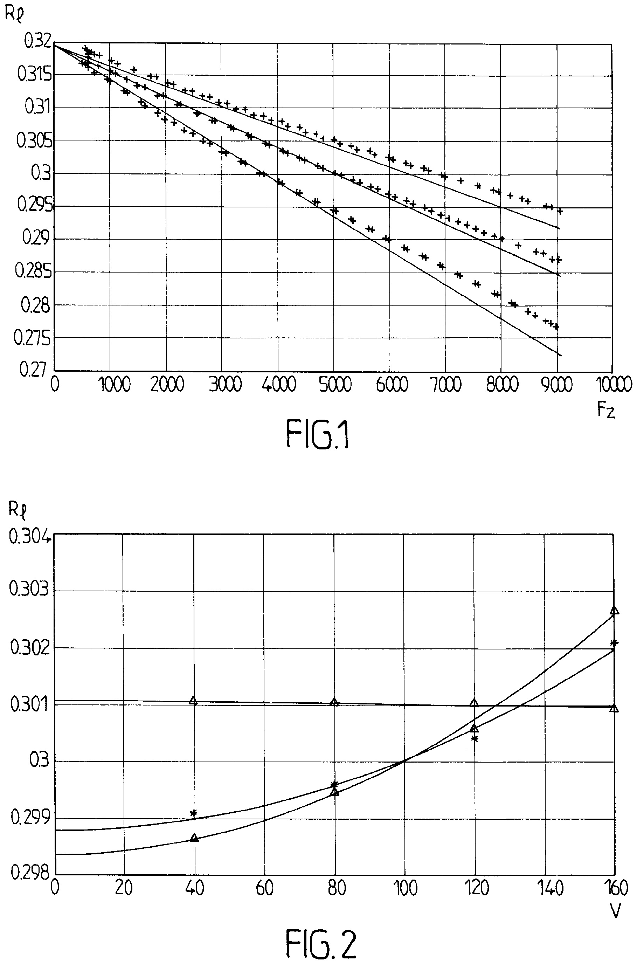

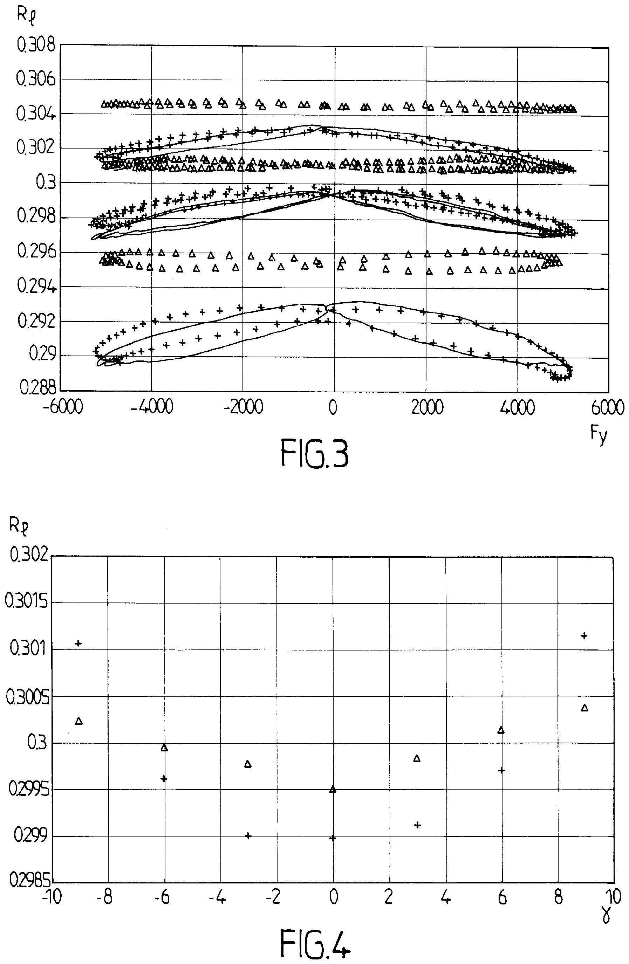

Le rayon libre étant la valeur du rayon écrasé obtenue à charge nulle, on y accède par extrapolation de la mesure du rayon en roulage simple, c'est-à-dire sans angles de dérive, sans carrossage ou courbure, ni couple moteur ou freineur, à différentes charges jusqu'à une valeur de charge nulle, comme illustré à la figure 1. Sur la figure 1, les tracés en trait continu sont des simulations à différentes pressions avec la formule exposée ci-dessus, les tracés en pointillés, points et croix sont des simulations avec la formule MF 5.2. Les données de la figure 1 permettent également d'avoir accès à l'effet charge. On constate en parallèle l'effet de la pression sur la dépendance du rayon écrasé à la charge, au travers de la rigidité verticale du pneumatique. On constate également que le rayon écrasé varie proportionnellement au carré de la vitesse, comme illustré sur la figure 2. Sur la figure 2, les tracés de forme courbe sont obtenus par le modèle proposé et par la mesure, le tracé sensiblement horizontal est obtenu par le modèle MF 5.2. Le rayon écrasé varie également avec l'effort de poussée transversale, comme illustré sur la figure 3. Sur la figure 3, On constate que cet effet est également influencé par la pression de gonflage. Sur la figure 3, les traits continus représentent les résultats obtenus avec le modèle proposé, les croix correspondent aux mesures, et les triangles correspondent aux simulations avec le modèle MF 5.2.

Le rayon écrasé varie également avec l'angle de carrossage, comme illustré sur la figure 4. Sur la figure 4, les triangles correspondent aux simulations réalisées avec le modèle proposé, et les croix sont les résultats des mesures.

Les constats précédents sont alors intégrés à une stratégie d'obtention des coefficients du modèle de rayon écrasé. On procède également à une stratégie d'obtention des coefficients du modèle d'effort transversal. Ces stratégies comportent différentes étapes qui peuvent être répétées itérativement afin d'améliorer la correspondance entre le modèle et la mesure de référence. Les modèles de rayon écrasé et d'effort transversal sont intégrés au sein d'un modèle global TameTire permettant de prendre en compte les interactions réciproques de l'un sur l'autre.

Le modèle TameTire est un modèle thermomécanique développé pour améliorer la prédiction des efforts en centre de roue pour les études de comportement du véhicule. La principale motivation vient du constat que les modèles mathématiques de type Magic Formula ne prennent pas en compte les effets de la température et de la vitesse qui sont significatifs sur les efforts pneu. En particulier ces modèles ne sont valables, a priori, que dans le domaine de mesure sur lequel ils ont été ajustés et ne permettent pas des extrapolations fiables lorsqu'on souhaite simuler des manoeuvres différentes du véhicule. Le modèle TaMeTirE calcule les efforts longitudinaux et latéraux en fonction de grandeurs physiques du pneu telles que dimension de l'aire de contact, rigidités des flancs, du bloc sommet, de la bande de roulement, propriétés de la gomme et des caractéristiques de frottement. Les caractéristiques du mélange entre module et coefficient d'adhérence sont couplées aux températures du pneu.

L'effort transversal est ici calculé à partir du modèle TameTire au lieu d'être imposé pour suivre une trajectoire donnée comme dans l'art antérieur.

Le présent mode de réalisation repose donc sur l'association d'une formule mathématique descriptive du rayon écrasé faisant intervenir l'effort de poussée transversale et le modèle TameTire pour la prédiction de cet effort en fonction des grandeurs d'entrée d'un outil de simulation telles que charge, dérive, carrossage, vitesse, pression, températures.

La formulation présentée dans ce mode de réalisation permet l'accès à une expression relativement simple, au travers d'un modèle mathématique, à la valeur du rayon écrasé d'un pneumatique en fonction des grandeurs pertinentes, et aisément mesurables sur une machine de test mécanique, via un jeu de coefficients accessible au travers d'une optimisation rapide.

La mise en œuvre d'une telle formulation repose ensuite sur la connaissance des grandeurs impliquées, qui sont, dans un outil de simulation, soit des grandeurs d'entrée telles que charge, vitesse, pression, carrossage, ou des grandeurs dépendantes du pneumatique telles que l'effort transversal. Ces grandeurs intermédiaires doivent pouvoir se déduire des grandeurs d'entrée pour réaliser une simulation. L'effort transversal étant dépendant de nombreux phénomènes, dont la température interne et la température de surface du pneumatique, il a été choisi ici de substituer à la mesure directe de l'effort transversal, non disponible au niveau des entrées d'un modèle de simulation dans le cas général, une valeur de cet effort transversal obtenue via le modèle TameTire.

On accède ainsi à une expression du rayon écrasé qui intègre également les effets de la température interne et de la température de surface, utilisable directement dans un outil de simulation. Le modèle TameTire gagne lui en précision dans la restitution des données géométriques mais aussi des données du torseur puisque celles-ci dépendent aussi du rayon écrasé.

Les résultats montrent une meilleure acuité du modèle ici proposé par rapport aux modèles connus. L'effet centrifugation associé à la vitesse n'est pas pris en compte dans la formulation MF-5.2. Cet effet est globalement bien rendu par Tametire. De même, les résultats montrent la bonne prise en compte de l'effet de l'effort transversal avec Tametire . Les effets de l'angle de carrossage sont mieux rendus avec TameTire qu'avec MF-5.2.

L'association d'une formule pertinente du rayon écrasé dans un modèle de description du torseur tel que TameTire permet la prise en compte d'effets couplés de l'un sur l'autre et réciproquement. Le modèle TameTire y gagne en précision des efforts mais surtout des couples générés tandis que le modèle de rayon écrasé intègre les avantages du modèle TameTire pour le calcul de l'effort transversal, notamment une meilleure prise en compte des effets thermiques, une plus grande rapidité de calcul et une meilleure pertinence associée aux bases physiques de ce modèle.

L'ensemble peut être implémenté au sein de logiciels de simulation de la dynamique des véhicules pour la réalisation de manœuvres plus réalistes, en particulier dans les situations aux limites du renversement du véhicule telles que manœuvres de sécurité du type test de l'élan, manoeuvres d'évitement, etc.... La présélection de composants du véhicule telles que liaisons au sol, pneumatiques, ou leur réglage, par exemple au travers des liaisons au sol ou encore de l'ESP pour Electronic Stability Program en anglais ou Électro-Stabilisateur Programmé, peuvent alors être réalisés plus efficacement. Un des avantages supplémentaires consiste en une meilleure prédiction des risques de contacts entre jante et chaussée, essentielle pour la problématique des tests d'évitement et/ou de renversement. Globalement, les interactions du rayon écrasé sur les autres paramètres du torseur TameTire ou du torseur sur le rayon écrasé sont prises en compte. On crée ainsi un modèle du torseur et d'une partie de la géométrie du pneumatique au travers du rayon écrasé qui offrent une plus grande rapidité d'obtention et une plus grande pertinence des grandeurs simulées.

L'invention est définie par l'objet des revendications indépendantes. Les revendications dépendantes définissent des modes de réalisation préférés.

## Revendications

1. Procédé de réalisation de pneumatique de véhicule automobile, **caractérisé :**

    - **en ce que** le procédé comporte les étapes suivantes :

        - mise en œuvre dans un programme d'un logiciel d'un outil de traitement calculatoire de simulation, d'une formule d'estimation d'un rayon écrasé $R_l$ du pneumatique de la forme :

$$R_l = R_0 - \frac{Fz}{K_{ZZ}} + R_V \times V^2 - \left( \frac{R_{Y1}}{Pg} + R_{Y2} \right) \times |Fy| + R_\gamma \times |\gamma|$$

, où $K_{ZZ}$ s'écrit sous la forme $K_{ZZ} = K_{ZZ0} + K_{ZZp} \times Pg$ , $K_{ZZ0}$ et $K_{ZZp}$ étant des valeurs numériques, où Pg est la pression de gonflage du pneumatique, V est la vitesse du véhicule, Fz est la charge appliquée sur le pneumatique, $F_Y$ est l'effort de poussée transversale exercé sur le pneumatique, $\gamma$ est l'angle de carrossage du véhicule, $R_0$ est une valeur de rayon libre du pneumatique au repos, $R_V$ est un coefficient d'influence de la vitesse du véhicule sur le rayon écrasé, $R_{Y1}$ est un coefficient d'influence d'une pression de gonflage sur le rayon écrasé via une valeur d'effort transversal, $R_{Y2}$ est un coefficient d'influence de l'effort transversal sur le rayon écrasé sans la part de l'effort transversal liée à la pression, $R_\gamma$ est un coefficient d'influence d'une valeur d'angle de carrossage du véhicule sur le rayon écrasé,

-- obtention des valeurs des grandeurs Pg, V, $F_Z$, $F_Y$, et des coefficients $R_0$, $R_V$, $R_{Y1}$, $R_{Y2}$ et $R_\gamma$ à utiliser dans la formule d'estimation du rayon écrasé $R_l$ du pneumatique,

-- estimation du rayon écrasé $R_l$ du pneumatique en exécutant le programme du logiciel de l'outil de traitement calculatoire de simulation, en utilisant les valeurs des grandeurs et des coefficients déterminées à l'étape précédente,

-- détermination d'un comportement prédéfinit du pneumatique sur la base du rayon écrasé $R_l$ estimé à l'étape précédente, et

-- réalisation d'un pneumatique avec un comportement de roulement prédéfini déterminé à l'étape précédente

c'est à dire en fonction du rayon écrasé calculé

- et en ce que à l'étape d'obtention des valeurs, les valeurs des coefficients, $R_0$, $R_V$, $R_{Y1}$, $R_{Y2}$, $R_\gamma$ sont déterminées par des essais physiques à l'aide d'une rouleuse de type sol plan sur un pneumatique représentatif du pneumatique à réaliser selon lesquels :

-- la valeur de $R_0$ correspond à la valeur du rayon écrasé obtenue à charge nulle, elle est déterminée par extrapolation de la mesure du rayon en roulage simple, c'est-à-dire sans angles de dérive, sans carrossage ou courbure, ni couple moteur ou freineur, à différentes charges jusqu'à une valeur de charge nulle,

-- la valeur de $R_V$ est obtenue à partir d'une animation de mesure du rayon écrasé du pneumatique à différentes valeurs de la vitesse du véhicule,

-- la valeur de $R_{Y1}$ est obtenue à partir d'une animation de mesure du rayon écrasé du pneumatique à différentes valeurs de la pression de gonflage via une valeur d'effort transversal,

-- la valeur de $R_{Y2}$ est obtenue à partir d'une animation de mesure du rayon écrasé du pneumatique à différentes valeurs de l'effort de poussée transversale,

-- la valeur de $R_\gamma$ est obtenue à partir d'une animation de mesure du rayon écrasé du pneumatique à différentes valeurs d'angle de carrossage.

2. Procédé selon l'une quelconque des revendications précédentes, **caractérisé en ce que** préalablement à l'étape de détermination d'un comportement prédéfinit du pneumatique, il comporte une étape d'utilisation du programme du logiciel pour simuler la dynamique des efforts en centre de roue.

3. Procédé selon la revendication précédente, caractérisé en ce les valeurs des coefficients $R_0$, $R_V$, $R_{Y1}$, $R_{Y2}$, $R_\gamma$ sont utilisées dans le programme du logiciel pour simuler la dynamique des efforts en centre de roue.

4. Procédé selon l'une quelconque des revendications précédentes, **caractérisé en ce qu'**à l'étape d'estimation du rayon écrasé $R_l$ du pneumatique, la valeur de l'effort de poussée transversale est déterminée en saisissant dans l'outil de traitement calculatoire de simulation une pluralité de paramètres physiques indicatifs de contraintes physiques auxquelles le pneumatique à réaliser serait soumis.

5. Procédé selon la revendication précédente, **caractérisé en ce que** la valeur de l'effort de poussée transversale ($F_Y$) est déterminée en tenant compte d'une température interne et d'une température de surface du pneumatique à réaliser.

6. Procédé selon la revendication 6 ou la revendication 7, **caractérisé en ce que** préalablement à l'étape d'estimation du rayon écrasé $R_l$, il comprend une étape d'utilisation du programme du logiciel pour simuler la dynamique des efforts en centre de roue selon lequel l'outil de traitement calculatoire de simulation est un processeur qui exécute le programme du logiciel pour simuler la dynamique des efforts en centre de roue.

7. Système comprenant un processeur de calcul de de pneumatique de véhicule automobile configuré pour estimer un rayon écrasé $R_l$ du pneumatique à réaliser, **caractérisé :**

- **en ce qu'**il comporte:

-- des instructions de programmation d'une formule d'estimation d'un rayon écrasé $R_l$ du pneumatique de

$$R_l = R_0 - \frac{Fz}{K_{ZZ}} + R_V \times V^2 - \left(\frac{R_{Y1}}{Pg} + R_{Y2}\right) \times |Fy| + R_\gamma \times |\gamma|$$

la forme :
, où Kzz s'écrit sous la forme
$K_{ZZ}$ = $K_{ZZ0}$ + $K_{ZZp}$ x $Pg$ , $K_{ZZ0}$ et $K_{ZZp}$ étant des valeurs numériques,

où Pg est la pression de gonflage du pneumatique, V est la vitesse du véhicule, Fz est la charge appliquée sur le pneumatique, $F_Y$ est l'effort de poussée transversale exercée sur le pneumatique, $\gamma$ est l'angle de carrossage du véhicule, $R_0$ est une valeur de rayon libre du pneumatique au repos, $R_V$ est un coefficient d'influence de la vitesse du véhicule sur le rayon écrasé, $R_{Y1}$ est un coefficient d'influence d'une pression de gonflage sur le rayon écrasé via une valeur d'effort transversal, $R_{Y2}$ est un coefficient d'influence de l'effort transversal sur le rayon écrasé sans la part de l'effort transversal liée à la pression, $R_\gamma$ est un coefficient d'influence d'une valeur d'angle de carrossage du véhicule sur le rayon écrasé,

-- des instructions de programmation d'estimation du rayon écrasé $R_l$ du pneumatique en exécutant les instructions de programmation de la formule d'estimation du rayon écrasé $R_l$ en utilisant des valeurs calculées ou implémentées de Pg, V, $F_Z$, $F_Y$, $R_0$ , $R_V$, $R_{Y1}$, $R_{Y2}$ et $R_\gamma$, et

-- des instructions de programmation de détermination d'un comportement prédéfinit du pneumatique sur la base du rayon écrasé $R_l$ estimé ; le système comprenant des moyens de réalisation d'un pneumatique avec un comportement de roulement prédéfini déterminé en fonction du rayon écrasé calculé par ledit processeur

- et en ce les valeurs des coefficients, $R_0$, $R_V$, $R_{Y1}$, $R_{Y2}$, $R_\gamma$ sont déterminées par des essais physiques à l'aide d'une rouleuse de type sol plan sur un pneumatique représentatif du pneumatique à réaliser selon lesquels :

-- la valeur de $R_0$ correspond à la valeur du rayon écrasé obtenue à charge nulle, elle est déterminée par extrapolation de la mesure du rayon en roulage simple, c'est-à-dire sans angles de dérive, sans carrossage ou courbure, ni couple moteur ou freineur, à différentes charges jusqu'à une valeur de charge nulle,

-- la valeur de $R_V$ est obtenue à partir d'une animation de mesure du rayon écrasé du pneumatique à différentes valeurs de la vitesse du véhicule,

-- la valeur de $R_{Y1}$ est obtenue à partir d'une animation de mesure du rayon écrasé du pneumatique à différentes valeurs de la pression de gonflage via une valeur d'effort transversal,

-- la valeur de $R_{Y2}$ est obtenue à partir d'une animation de mesure du rayon écrasé du pneumatique à différentes valeurs de l'effort de poussée transversale,

-- la valeur de $R_\gamma$ est obtenue à partir d'une animation de mesure du rayon écrasé du pneumatique à différentes valeurs d'angle de carrossage.

8. Pneumatique de véhicule automobile, **caractérisé :**

- **en ce qu'**il est réalisé selon le procédé de l'une des revendications 1 à 6.


**Patentansprüche**

1. Verfahren zur Herstellung eines Kraftfahrzeug-Luftreifens, **gekennzeichnet dadurch:**

- **dass** das Verfahren die folgenden Schritte aufweist:

- - Anwendung, in einem Programm einer Software eines rechnerischen Simulationsverarbeitungswerkzeugs, einer Schätzformel eines Radius unter Last $R_l$ des Luftreifens der Form:

$$R_l = R_0 - \frac{Fz}{K_{ZZ}} + R_V \times V^2 - \left(\frac{R_{Yl}}{Pg} + R_{Y2}\right) \times$$

|Fy| + $R_\gamma \times$ |$\gamma$|, wobei $K_{ZZ}$ in der Form $K_{ZZ}$ = $K_{ZZ0}$ +$K_{ZZp} \times$ Pg geschrieben wird, wobei $K_{ZZ0}$ und $K_{ZZp}$ numerische Werte sind, wobei Pg der Luftdruck des Luftreifens ist, V die Geschwindigkeit des Fahrzeugs ist, $F_Z$ die auf den Luftreifen angewandte Last ist, $F_Y$ die auf den Luftreifen ausgeübte Querschubkraft ist, y der Radsturzwinkel des Fahrzeugs ist, $R_0$ ein Wert

eines freien Radius des Luftreifens in Ruhestellung ist, $R_V$ ein Einflusskoeffizient der Geschwindigkeit des Fahrzeugs auf den Radius unter Last ist, $R_{Y1}$ ein Einflusskoeffizient eines Luftdrucks auf den Radius unter Last mittels eines Querkraftwerts ist, $R_{Y2}$ ein Einflusskoeffizient der Querkraft auf den Radius unter Last ohne den mit dem Druck verbundenen Teil der Querkraft ist, $R_\gamma$ ein Einflusskoeffizient eines Radsturzwinkelwerts des Fahrzeugs auf den Radius unter Last ist,

- - Erhalt der Werte der Größen Pg, V, $F_Z$, $F_Y$ und der Koeffizienten $R_0$, $R_V$ $R_{Y1}$, $R_{Y2}$ und $R_\gamma$, die in der Schätzformel des Radius unter Last $R_l$ des Luftreifens zu verwenden sind,

- - Schätzung des Radius unter Last $R_l$ des Luftreifens durch Ausführung des Programms der Software des rechnerischen Simulationsverarbeitungswerkzeugs, unter Verwendung der im vorhergehenden Schritt bestimmten Werte der Größen und der Koeffizienten,

- - Bestimmung eines vordefinierten Verhaltens des Luftreifens auf der Basis des im vorhergehenden Schritt geschätzten Radius unter Last $R_l$, und

- - Herstellung eines Luftreifens mit einem im vorhergehenden Schritt bestimmten vordefinierten Fahrverhalten, d.h. abhängig vom berechneten Radius unter Last,

- und **dass** im Schritt des Erhalts der Werte die Werte der Koeffizienten $R_0$, $R_V$, $R_{Y1}$, $R_{Y2}$, $R_\gamma$ durch physikalische Versuche mit Hilfe eines Rollenprüfstands des Typs ebener Boden an einem für den herzustellenden Luftreifen repräsentativen Luftreifen bestimmt werden, gemäß denen:

- - der Wert von $R_0$ dem bei einer Last Null erhaltenen Wert des Radius unter Last entspricht, er wird durch Extrapolation der Messung des Radius bei einfachem Fahren bestimmt, d.h. ohne Driftwinkel, ohne Radsturz oder Krümmung, weder Antriebs- noch Bremsmoment, bei verschiedenen Lasten bis zu einem Lastwert Null,

- - der Wert von $R_V$ ausgehend von einer Animation einer Messung des Radius unter Last des Luftreifens bei verschiedenen Werten der Geschwindigkeit des Fahrzeugs erhalten wird,

- - der Wert von $R_{Y1}$ ausgehend von einer Animation einer Messung des Radius unter Last des Luftreifens bei verschiedenen Werten des Luftdrucks mittels eines Querkraftwerts erhalten wird,

- - der Wert von $R_{Y2}$ ausgehend von einer Animation einer Messung des Radius unter Last des Luftreifens bei verschiedenen Werten der Querschubkraft erhalten wird,

- - der Wert von $R_\gamma$ ausgehend von einer Animation einer Messung des Radius unter Last des Luftreifens bei verschiedenen Radsturzwinkelwerten erhalten wird.

2. Verfahren nach einem der vorhergehenden Ansprüche, **dadurch gekennzeichnet, dass** es vor dem Schritt der Bestimmung eines vordefinierten Verhaltens des Luftreifens einen Schritt der Verwendung des Programms der Software aufweist, um die Dynamik der Kräfte in der Radmitte zu simulieren.

3. Verfahren nach dem vorhergehenden Anspruch, **dadurch gekennzeichnet, dass** die Werte der Koeffizienten $R_0$, $R_V$, $P_{Y1}$, $R_{Y2}$, $R_\gamma$ in dem Programm der Software verwendet werden, um die Dynamik der Kräfte in der Radmitte zu simulieren.

4. Verfahren nach einem der vorhergehenden Ansprüche, **dadurch gekennzeichnet, dass** im Schritt der Schätzung des Radius unter Last $R_l$ des Luftreifens der Wert der Querschubkraft bestimmt wird, indem in das rechnerische Simulationsverarbeitungswerkzeug eine Vielzahl physikalischer Parameter eingegeben wird, die auf physikalische Zwänge hinweisen, denen der herzustellende Luftreifen ausgesetzt sein wird.

5. Verfahren nach dem vorhergehenden Anspruch, **dadurch gekennzeichnet, dass** der Wert der Querschubkraft ($F_Y$) unter Berücksichtigung einer Innentemperatur und einer Oberflächentemperatur des herzustellenden Luftreifens bestimmt wird.

6. Verfahren nach Anspruch 6 oder Anspruch 7, **dadurch gekennzeichnet, dass** es vor dem Schritt der Schätzung des Radius unter Last $R_l$ einen Schritt der Verwendung des Programms der Software enthält, um die Dynamik der Kräfte in der Radmitte zu simulieren, gemäß dem das rechnerische Simulationsverarbeitungswerkzeug ein Prozessor ist, der das Programm der Software ausführt, um die Dynamik der Kräfte in der Radmitte zu simulieren.

7. System, das einen Prozessor zur Berechnung des eines Kraftfahrzeug-Luftreifens enthält, der konfiguriert ist, einen Radius unter Last $R_l$ des herzustellenden Luftreifens zu schätzen, **dadurch gekennzeichnet,**

- **dass** es aufweist:

- - Programmieranweisungen einer Schätzformel eines Radius unter Last R_l des Luftreifens der Form: R_l

$$= R_0 - \frac{F_Z}{K_{ZZ}} + R_V \times V^2 - \left(\frac{R_{Yl}}{Pg} + R_{Y2}\right) \times |Fy| + R_y \times |\gamma|$$

, wobei $K_{ZZ}$ in der Form $K_{ZZ}$ = K_{ZZ0} + K_{ZZp} x Pg geschrieben wird, wobei K_{ZZ0} und K_{ZZp} numerische Werte sind, wobei Pg der Luftdruck des Luftreifens ist, V die Geschwindigkeit des Fahrzeugs ist, F_Z die auf den Luftreifen angewandte Last ist, F_Y die auf den Luftreifen ausgeübte Querschubkraft ist, y der Radsturzwinkel des Fahrzeugs ist, R_0 ein Wert eines freien Radius des Luftreifens in Ruhestellung ist, R_V ein Einflusskoeffizient der Geschwindigkeit des Fahrzeugs auf den Radius unter Last ist, R_{Y1} ein Einflusskoeffizient eines Luftdrucks auf den Radius unter Last mittels eines Querkraftwerts ist, R_{Y2} ein Einflusskoeffizient der Querkraft auf den Radius unter Last ohne den mit dem Druck verbundenen Teil der Querkraft ist, R_γ ein Einflusskoeffizient eines Radsturzwinkelwerts des Fahrzeugs auf den Radius unter Last ist,

- - Programmieranweisungen zur Schätzung des Radius unter Last R_l des Luftreifens durch Ausführung der Programmieranweisungen der Schätzformel des Radius unter Last R_l unter Verwendung der berechneten oder implementierten Werte von Pg, V, F_Z, F_Y, R_0, R_V, R_{Y1}, R_{Y2} und R_γ, und

- - Programmieranweisungen zur Bestimmung eines vordefinierten Verhaltens des Luftreifens auf der Basis des geschätzten Radius unter Last R_l; wobei das System Einrichtungen zur Herstellung eines Luftreifens mit einem vordefinierten Fahrverhalten enthält, das abhängig vom vom Prozessor berechneten Radius unter Last bestimmt wird,

- und **dass** die Werte der Koeffizienten R_0, R_V, R_{Y1}, R_{Y2} und R_γ durch physikalische Versuche mit Hilfe eines Rollenprüfstands des Typs ebener Boden an einem für den herzustellenden Luftreifen repräsentativen Luftreifen bestimmt werden, gemäß denen:

- - der Wert von R_0 dem bei einer Last Null erhaltenen Wert des Radius unter Last entspricht, er wird durch Extrapolation der Messung des Radius bei einfachem Fahren bestimmt, d.h. ohne Driftwinkel, ohne Radsturz oder Krümmung, weder Antriebs- noch Bremsmoment, bei verschiedenen Lasten bis zu einem Lastwert Null,

- - der Wert von R_V ausgehend von einer Animation einer Messung des Radius unter Last des Luftreifens bei verschiedenen Werten der Geschwindigkeit des Fahrzeugs erhalten wird,

- - der Wert von R_{Y1} ausgehend von einer Animation einer Messung des Radius unter Last des Luftreifens bei verschiedenen Werten des Luftdrucks mittels eines Querkraftwerts erhalten wird,

- - der Wert von R_{Y2} ausgehend von einer Animation einer Messung des Radius unter Last des Luftreifens bei verschiedenen Werten der Querschubkraft erhalten wird,

- - der Wert von R_γ ausgehend von einer Animation einer Messung des Radius unter Last des Luftreifens bei verschiedenen Radsturzwinkelwerten erhalten wird.

8. Kraftfahrzeug-Luftreifen, **dadurch gekennzeichnet, dass** er gemäß dem Verfahren eines der Ansprüche 1 bis 6 hergestellt wird.

## Claims

1. Method for producing a motor vehicle tyre, **characterized in that** it comprises the following steps :

- implementing, in a software for simulating, an estimation formula a laden radius R_l of the tyre of the form:

$$R_l = R_0 - \frac{Fz}{Kzz} + R_V \times V^2 - \left(\frac{R_{Y1}}{Pg} + R_{Y2}\right) \times |Fy| + R_\gamma \times |\gamma|$$

, where $K_{ZZ}$ is written in the form $K_{ZZ}$ = $K_{ZZ0}$ + K_{ZZp} × $Pg$, K_{ZZ0} and K_{ZZp} being numerical values, where Pg is the inflation pressure of the tyre, V is the speed of the vehicle, F_Z is the load applied to the tyre, F_Y is the transverse thrust force exerted on the tyre, γ is the camber angle of the vehicle, R_0 is a free radius value of the tyre at rest, R_V is a coefficient of influence of the speed of the vehicle on the laden radius, $R_{Y1}$ is a coefficient of influence of an inflation pressure on the laden radius via a transverse load value, $R_{Y2}$ is a coefficient of influence of the transverse load on the laden radius without the part of the transverse load associated with the pressure, $R_\gamma$ is a coefficient of influence of a camber angle value of the vehicle on the laden radius

- obtaining values of parameters Pg, V, Fz Fy and coefficients $R_0$, $R_V$, $R_{Y1}$, $R_{Y2}$, $R_\gamma$ to be used in the estimation formula of the laden radius $R_l$ of the tyre

- estimating the laden radius $R_l$ of the tyre by executing the software for simulating, carrying out the parameters and coefficients determined in the previous step, and

- determining a predefined behavior of the tyre, on the basis of the estimated laden radius determined in the previous step.

- manufacturing a tyre with a predetermined driving behaviour determined in the previous step, which means depending on the calculated laden radius,

And characterizes **in that**,

- in the step of obtaining values, the values of coefficients $R_0$, $R_V$, $R_{Y1}$, $R_{Y2}$, $R_\gamma$ Are determined via the physical tests carried out with the aid of a roller of the flat ground type on a tyre representative of the tyre to be manufactured, with :

   - the value of $R_0$, is the value of the laden radius that is obtained at zero load, being found by extrapolating the measurement of the radius during simple rolling, that is to say without cornering angles, without camber or curvature, or engine or braking torque, at different loads down to a value of zero load,
   - the value of $R_V$ is obtained by a measurement animation of the laden radius at different values of the speed of the vehicle,
   - the value of $R_{Y1}$ is obtained by a measurement animation of the laden radius at different values of inflation pressure via a transverse load value,
   - the value of $R_{Y2}$ is obtained by a measurement animation of the laden radius at different values of transverse load on the laden radius
   - the value of $R_\gamma$ is obtained by a measurement animation of the laden radius at different values of a camber angle value of the vehicle.

2. Method according to any one of the preceding claims, **characterized in that** it includes the step of using software for simulating the force dynamics at the wheel centre.

3. Method according to the preceding claim, **characterized in that** it comprises the step of using the coefficients $R_0$, $R_V$, $R_{Y1}$, $R_{Y2}$, $R_\gamma$ in the software for simulating the force dynamics at the wheel centre.

4. Method according to any one of the preceding claims, **characterized in that** the transverse thrust force is determined by simulation with the aid of a simulation computer processing tool by inputting a plurality of physical parameters that are indicative of physical stresses to which the tyre is subjected into the simulation computer processing tool.

5. Method according to the preceding claim, **characterized in that** the transverse thrust force ($F_Y$) is determined taking an internal temperature and a surface temperature of the tyre into account.

6. Method according to Claim 4 or Claim 5, **characterized in that** the simulation computer processing tool is a processor controlled by the software for simulating the force dynamics at the wheel centre.

7. System comprising a processor for calculating the behaviour of a motor vehicle tyre, said processor being configured to estimate a laden radius $R_l$ of the tyre, **characterized in that** it comprises :

   - instructions for programming an estimation formula of the laden radius $R_l$ of the form:

$$R_l = R_0 - \frac{Fz}{Kzz} + R_V \times V^2 - \left( \frac{R_{Y1}}{Pg} + R_{Y2} \right) \times |Fy| + R_\gamma \times |\gamma|$$

, where $K_{ZZ}$ is written in the form $K_{ZZ} = K_{ZZ0} + K_{ZZp} \times Pg$, $K_{ZZ0}$ and $K_{ZZp}$ being numerical values, where Pg is the inflation pressure of the tyre, V is the speed of the vehicle, $F_Z$ is the load applied to the tyre, $F_Y$ is the transverse thrust force exerted on the tyre, $\gamma$ is the camber angle of the vehicle, $R_0$ is a free radius value of the tyre at rest, $R_V$ is a coefficient of influence of the speed of the vehicle on the laden radius, $R_{Y1}$ is a coefficient of influence of an inflation pressure on the laden radius via a transverse load value, $R_{Y2}$ is a coefficient of influence of the transverse load on the laden radius without the part of the transverse load associated with the pressure, $R_\gamma$ is a coefficient of influence of a camber angle value of the vehicle on the laden radius,

   - instructions for programming an estimation of the laden radius $R_l$. by executing instructions for programming an estimation formula of the laden radius $R_l$ using calculated or implemented value of Pg, V, Fz Fy $R_0$, $R_V$, $R_{Y1}$, , $R_{Y2}$, $R_\gamma$

- instructions for programming determination of a predetermined behaviour of the tire on the basis of the estimated laden radius RI dfh,

the system comprises means for manufacturing a tire with a predetermined rolling behaviour predetermined based on the laden radius calculated by said processor, and **in that**

- the value of $R_0$, is the value of the laden radius that is obtained at zero load, being found by extrapolating the measurement of the radius during simple rolling, that is to say without cornering angles, without camber or curvature, or engine or braking torque, at different loads down to a value of zero load,

- the value of $R_V$ is obtained by a measurement animation of the laden radius at different values of the speed of the vehicle,

- the value of $R_{Y1}$ is obtained by a measurement animation of the laden radius at different values of inflation pressure via a transverse load value,

- the value of $R_{Y2}$ is obtained by a measurement animation of the laden radius at different values of transverse load on the laden radius

- the value of $R_\gamma$ is obtained by a measurement animation of the laden radius at different values of a camber angle value of the vehicle.

8. Tire for an automotive vehicle, **characterized in that** it is manufactured according the method of any of claims 1 to 6.

FIG.1

FIG.2

FIG.3

FIG.4

**RÉFÉRENCES CITÉES DANS LA DESCRIPTION**

**Documents brevets cités dans la description**

- JP 2004161210 B
- WO 2012071379 A